# EUROPEAN PATENT SPECIFICATION

(11) **EP 1 592 526 B1**
(45) Date of publication and mention of the grant of the patent: **03.10.2007**
(21) Application number: 03815851.5
(22) Date of filing: 13.02.2003
(51) Int. Cl.: B21D 47/04, B29C 44/30, E04D 3/35

(54) **METHOD AND APPARATUS FOR CONTINUOUS MANUFACTURING OF CURVED INSULATING PANELS**
VERFAHREN UND VORRICHTUNG ZUR KONTINUIERLICHEN HERSTELLUNG VON GEKRÜMMTEN ISOLIERPLATTEN
PROCEDE ET APPAREIL DESTINES A LA FABRICATION EN CONTINU DE PANNEAUX ISOLANTS INCURVES

(43) Date of publication of application: 09.11.2005
(73) Proprietor: METECNO S.p.A., 20067 Tribiano (IT)
(72) Inventor: MORANDI, Maurizio, I-10143 Torino (IT)
(74) Representative: Ferroni, Filippo
(86) International application number: PCT/IT2003/000074
(87) International publication number: WO 2004/071691

(56) References cited:
- IT-B- 1 181 454
- US-A- 3 643 306
- US-A- 3 734 668
- US-A- 4 147 582

## Description

The present invention relates to the continuous manufacturing of composite insulating panels with curved geometry, that is to say panels of the so-called "sandwich" type, wherein a core of insulating material, generally a synthetic foam or a mineral wool, is interposed between two outer faces of sheet metal.

These panels are usually used to construct roofs of buildings, prefabricated constructions, industrial sheds and the like; to this end, in order to strengthen the structure of the panels and therefore to make them suitable for different applications, their outer faces of sheet metal are usually indented or ribbed.

The indentations or ribs are obtained by profiling metal strips unrolled from coils; after the profiling phase, the insulating core is then applied.

In the case of flat panels, this operation can be readily carried out downstream of the profiling phase without interrupting the movement of the strip along the production line, thereby bringing about a single continuous process which is completed by the subsequent passage of the flat unfinished product into a press where the final expansion of the foam takes place, obviously when the insulating core is made of foam.

A flying cutter which carries out the cutting of the unfinished product, is located at the end of the production line thereby obtaining panels of the desired dimensions.

In the case of curved panels, the manufacturing process is different, i.e. it is discontinuous, and is carried out by profiling separately the outer faces of sheet metal, like for example, is disclosed in Italian patent No. 1181454 of the same applicant of the present application, and by applying thereafter the insulating material (expanded resin, mineral wool, or the like) between the outer faces.

For this purpose the outer faces profiled and curved to the desired radius, are subsequently arranged on suitable curved dies in which the expansion of the resin or the adhesive bonding of the wool takes place: however it will be readily appreciated that a similar operating method substantially lengthens production times, because each time it is necessary to arrange the previously-bent sheets on the die after having removed a finished panel, in order to start a subsequent processing operation.

If it is further taken into account that in most cases these operations are carried out manually, it will appear evident how highly needed is the improvements of such a state of the art.

Therefore, the technical problem underlying the present invention is to provide a method for continuously producing curved insulating panels, likewise it occurs for flat panels.

This problem is solved by a method whose features are set out in the claims appended to the present description; the invention further comprises an apparatus for the continuous manufacturing of curved panels, whose features are also set out in the appended claims.

Both the method and the apparatus mentioned above will be better understood from the following description, given with reference to a non-limiting example of the invention illustrated in the appended drawings, wherein:
- Figure 1 is a general view of an apparatus according to the invention;

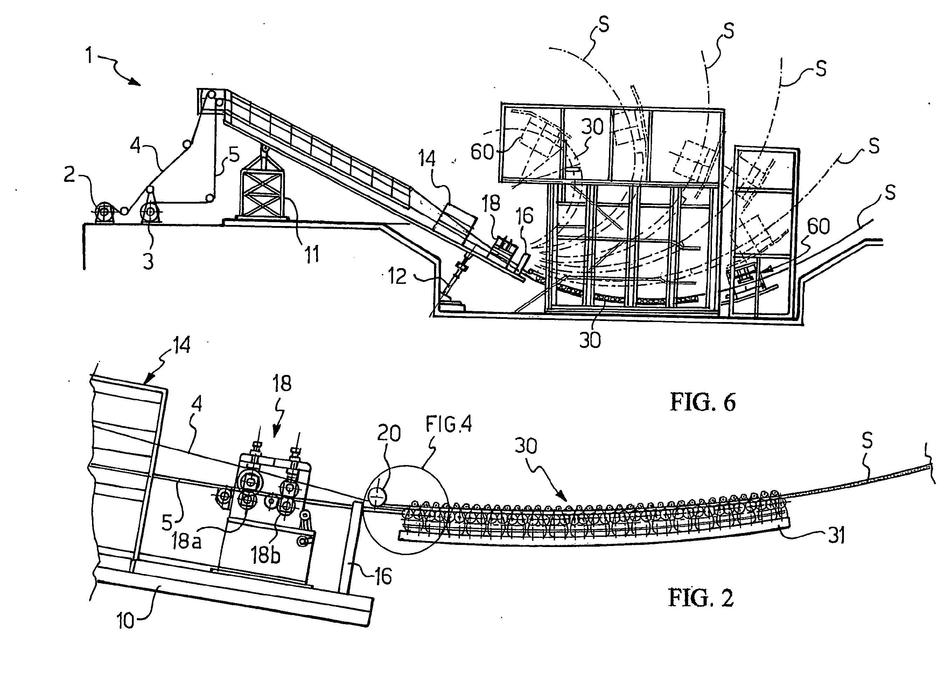

- Figure 2 is a detailed view of part of the apparatus in Figure 1;
- Figure 3 is a view along line III-III of the apparatus in Figure 1;
- Figure 4 shows a detail in an enlarged scale, of the apparatus in Figure 2;
- Figure 5 shows a panel manufactured by the above apparatus;
- Figure 6 shows the apparatus in Figure 1 under different operating conditions.

With reference to these Figures, an apparatus for the continuous manufacturing of curved panels with outer faces of sheet metal, is generally designated as 1.

For this reason, at the inlet of the apparatus there are arranged two reels 2 and 3, from which respective coils of strip metal 4 and 5 are unrolled and made to advance one above the other, throughout the apparatus; downstream of the reels, longitudinal strengthening ribs are formed on the strips 4 and 5 in a manner known per se, by means of corresponding roller profiling machines 6 and 7.

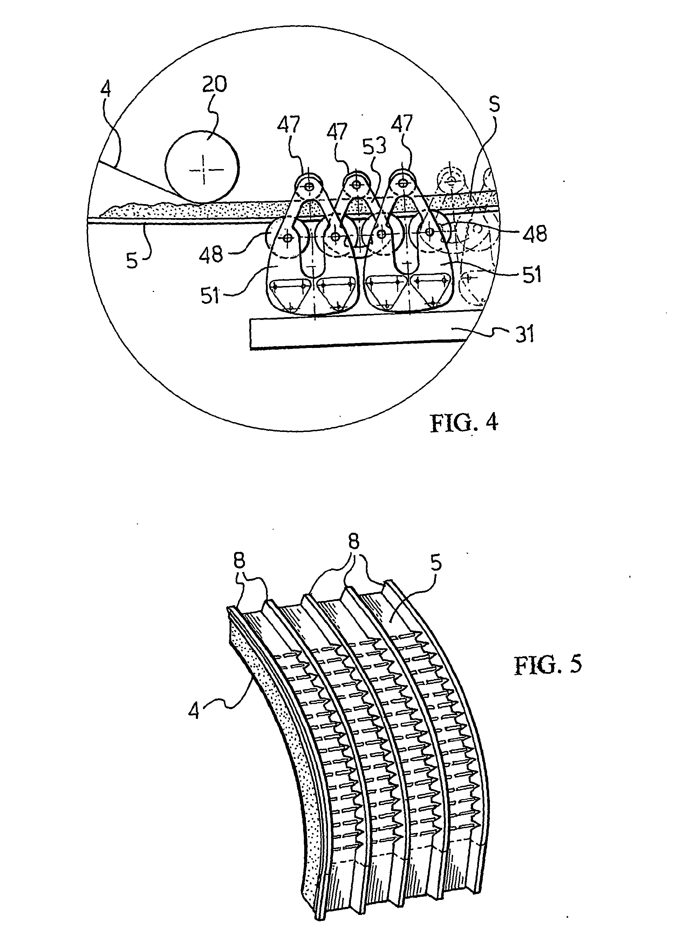

According to this embodiment of the invention, the strip 5 which advances in the lower position along the apparatus is intended to form the outer surface of the panels and be profiled with prominent trapezoidal ribs 8 (see Figure 5), whereas the upper strip 4 which is used to form the inner surface is profiled with shallow ribs which do not impede the deviation of its advancement path, as will be better appreciated below.

According to a preferred configuration of the invention, the profiling machines 6 and 7 are arranged on a support structure 10 which is inclined in an adjustable manner; for this purpose the support structure 10 is hinged at the rear to a column 11, and at the front is supported by a hydraulic cylinder 12: the lengthening or shortening of the cylinder 12 when operated, allows the inclination of the structure 10 to be varied as a result.

It is apparent that the method for varying the inclination of the structure 10 could be brought about in different manners, for example by providing a column 11 of variable length and by hinging the structure to a fixed support at the front.

A preheating oven 14 is located downstream of the profiling machines 6 and 7 on the support structure 10, in which oven 14 the strips 4, 5 of sheet metal are heated in order to promote the subsequent expansion of the polyurethane foam, injected by an injection apparatus 16.

In a preferred embodiment, the injection apparatus 16 comprises at least two injection heads, one for depositing the synthetic resin on the lower strip 5 and the other for applying it on the upper strip 4; advantageously, in this case the resin is preferably sprayed onto the upper strip 4 so as to adhere thereto without falling onto the lower strip. The application of the resin on both strips 4, 5 allows a more rapid expansion thereof, and therefore a reduction in the length of the apparatus downstream, as will be better appreciated below; however, the resin could be applied only to the lower strip, as occurs in conventional apparatus.

A station 18 for bending the lower strip 5 is present between the oven 14 and the apparatus 16; the station 18 provides for the formation of transverse impressions on the sheet metal, like those visible in Figure 5, which allow the bending of the strip even in the case it is profiled with prominent strengthening ribs.

The station 18 is of the type known per se comprising two pairs of opposing rollers 18a, 18b, which form the aforesaid impressions on the strip; naturally, the station 18 could be different, for example of the type described in Italian patent number 1181454.

In this embodiment of the invention, the upper strip 4 is not processed in the station 18 because the ribs present on it are small and do not interfere with the bending thereof, caused by the deflection roller 20 positioned at the inlet of a final curved mould 30, where the continuous unfinished product, from which the panels will be cut, assumes the definitive shape.

However, it is evident that it would be possible to provide an apparatus wherein the upper strip 4 is also bent before being introduced into the subsequent mould 30.

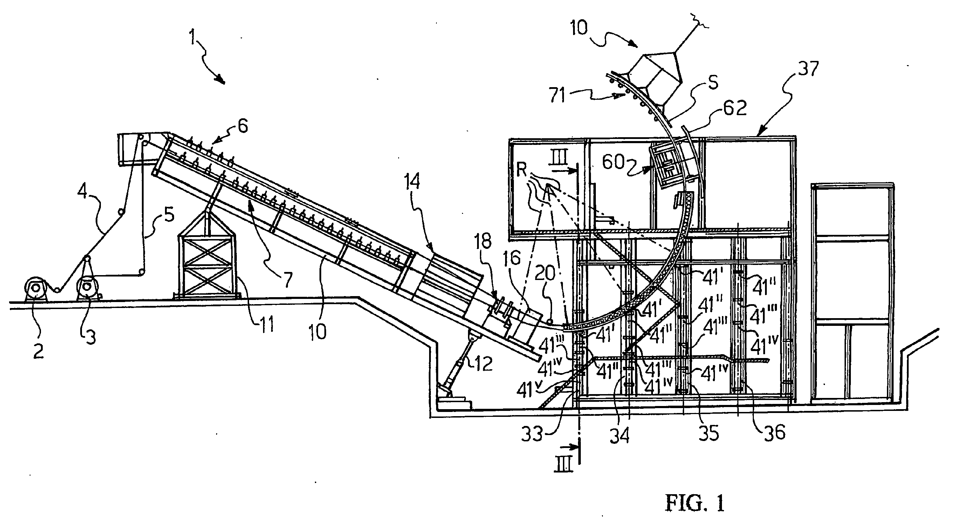

The mould 30 is supported by two curved longitudinal members 31 and 32, inside a series of portals or frames 33, 34, 35 and 36, which basically form a carrying cage 37 visible in Figure 1.

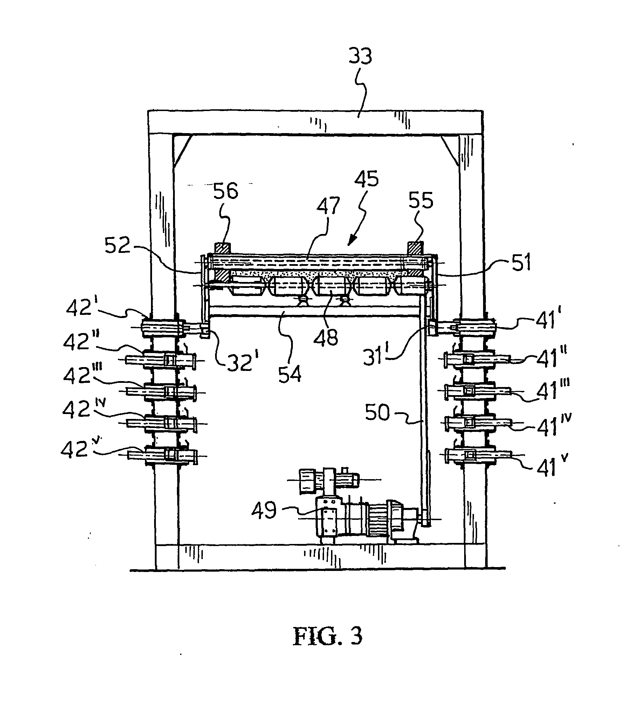

More specifically, jacks (hydraulic, pneumatic or electromechanical jacks) 41', 41", 41 "', ... 41ⁿ n and 42', 42", 42"', ...42ⁿ are arranged at different height levels along the uprights of the above-mentioned portals, which jacks support, in their advanced operative state (visible in Figure 3 only for the highest jacks 41' and 42'), longitudinal members 31', 31", 31"', ...31ⁿ and 32', 32", 32"', ...32ⁿ, on which the mould 30 is positioned.

The mould 30 is formed by a series of connected guide modules 45 which serve to guide the advancement of the curved unfinished product S and to apply thereon an action for containing the pressure caused by the expansion of the polyurethane foam, thereby imparting to the unfinished product S its desired final thickness.

The guide modules 45 each comprise an upper roller 47 and a pair of lower rollers 48, whose external surface is shaped in accordance with the profile of the upper strip 4 and lower strip 5; the lower rollers 48 are kinematically connected to each other in a manner known per se by means of chains (not shown in the drawings), thereby being able to be set in rotation by a motor 49 and a belt transmission 50.

The axes of the upper and lower rollers 47 and 48 are advantageously supported at the vertices of triangles, by plates 51 and 52.

As will be better appreciated from Figure 4, the plates 51 and 52 are mutually hinged at the lower vertices of such triangles by means of connection elements 53, which are also triangular, so as to form a chain conforming to the curved development of the longitudinal members 31 and 32.

The connection elements 53 (only those between the plates 51 are illustrated in Figure 4, but naturally there are also others between the plates 52) are not strictly necessary to obtain the articulated chain, since the plates 51 and 52 could be directly hinged to each other; however, the presence of these elements is preferable because it makes possible to have a reduced spacing for the upper rollers 47.

In order to further strengthen the structure of the guide modules 45, the plates 51 and 52 can be connected in the lower portion thereof by a crosspiece 54.

Finally, the space present between the upper strip 4 and the lower strip 5 is closed at the sides, i.e. in connection with plates 51 and 52, by lateral closing means 55 and 56; the latter are in practice continuous strip-like packings which advance in parallel with the strips 4 and 5 between the rollers 47 and 48, and return externally thereto similarly to a conveyor belt.

The articulated connection of the guide modules 45 allows them to be configured according to any desired radius of curvature of the manufactured panels; in other words, the mould 30 so formed is not rigid and can therefore be used to produce panels of different curvature, with obvious advantages in terms of costs and productivity of the whole apparatus.

To this end, in the case batches of panels of the same type (that is to say, with equal thickness and equal profile of the outer faces) but with different curvatures must be manufactured, it will be simply necessary to withdraw the jacks 41', 42' of the portals 33 - 35, widening the longitudinal members 31', 32', and to lower the mould 30 downwards onto another pair of curved longitudinal members 31", 32", 31"', 32"', ..., arranged at a lower level and set in a forward position by the respective jacks 41.

The different curvature profiles of the mould and of the relative longitudinal members are shown in Figure 6, where the unfinished products S which can be obtained are also visible.

Finally, a cutter 60 of the band or disk type, or another equivalent tool, is located downstream of the mould 30; this tool moves along a circular path concentric with that of the unfinished product S, so as to be able to carry out its cutting in a radial direction relative thereto. For this purpose, guides 62 are fixed in the cage 37 to guide the movement of the cutter tool.

The curved panels obtained after the cutting are removed from the line by lifting means 70; in this case, such means consists of lifting arms provided with suction cups or magnets, which hold the lower face of the panel and lift it from a set of rollers 71 where it rests after the cutting operation.

Naturally any other system suitable for this task could be used as an alternative to the lifting means and the rollers above, such as, for example, moving templates and the like.

In order to manufacture curved panels with the above-described apparatus, the mould 30 is first arranged on a pair of longitudinal members 31, 32 having curvature corresponding to that of the panels to be produced; the inclination of the support frame 10 is also adjusted, if necessary, to provide the lower strip 5 with the same radius of curvature R, either downstream of the station 18 and in the mould 30.

Once this positioning has been carried out, the first phase of the process takes place in a manner which can be said to be conventional, in the sense that the metal strips 4 and 5 unrolled from the reels 2 and 3 are formed in the profiling machines 6 and 7, downstream of which they enter the oven 14.

Upon leaving the oven 14, the lower strip 5 is then curved in the station 18 according to the explanation already given before, and the synthetic (polyurethane, phenolic or the like) resin is applied on the strip 5; in the preferred form of the invention under discussion, the resin is also sprayed by the apparatus 16 onto the upper strip 4, so that the resin can expand more quickly to form the insulating core of the panels.

Indeed, in this manner, for a given quantity of resin applied the chemical expansion reaction occurs in a shorter lapse of time because it develops contemporaneously in the two layers applied to the lower and upper strips 5 and 4, which have respective thicknesses smaller than that required if all of the resin had been supplied on the lower strip 5.

The expansion of the resin occurs inside the mould 30 which exerts a containing action on the upper strip 4 and the lower strip 5, so as to maintain them spaced at a distance corresponding to the final thickness of the panels to be produced.

In this connection it is worth to notice how the above-mentioned containing action is uniform and effective owing to the arrangement of the rollers 47 and 48 close together, which define de facto a curved path wherein the unfinished product formed by the strips 4, 5 with the expanded resin interposed therebetween, advances. The arrangement of the rollers close together is further promoted by the articulated connection of the guide modules 45 and by the arrangement of the axes of rotation thereof at the vertices of triangles.

Indeed in this manner the distances both between the upper rollers 47 and between the lower rollers 48 of each module 45 and of the following module, are minimised; this is evident when the lower rollers are considered (cf. Figure 4), but for the upper rollers it must be noted that the relative rotation of one module relative to another about the mutual axis of articulation, owing to the curvature of the longitudinal members 31 and 32 on which they are mounted, moves together the upper vertices of the triangles where the rollers 47 are located.

It follows, therefore, that the pressure applied by the rollers on the unfinished product advancing inside the mould 30 is substantially equal along the entire extension of the strips 4 and 5 so as to prevent occurrences of swelling or deformation of the strips 4 and 5 between one roller and the next.

From the foregoing it is possible to understand how the panel manufacturing method carried out with the above-described apparatus solves the technical problem underlying the invention.

First of all, it should be noted that the production cycle is carried out without interruption, likewise for the production of flat panels.

Therefore, this allows high levels of productivity to be achieved which cannot be obtained with the presently known process as referred to at the beginning, that is to say with discontinuous operating cycles in which the panels are produced one at a time, by forming in line the components thereof and then carrying out the so-called foaming, i.e. the expansion of the polyurethane, phenolic or similar resin, in a separate press where a suitable mould is provided.

This result is made possible because according to the invention, there is continuity between the curvature of the strip bent by the station 18, which in this case is the lower strip 5 although it could also be the upper strip 4, and the curvature of the same strip inside the mould 30: in this manner, when the strip enters and advances inside the curved mould, it does not interfere with the rollers 47 and 48 thereof.

In other words, once it has been bent, the strip passes along a single circular path of a predetermined radius (in the embodiment, radius R), starting from the station 18 and ending at the outlet of the mould 30, without undergoing substantial deformations.

From the technical point of view this requirement is obtained in the apparatus by arranging the bending station 18 and the mould 30, in such a manner that the strip bent by the former does not have discontinuity when entering and moving inside the latter.

The apparatus of the above-described embodiment is further provided with functional flexibility because it can produce panels according to different radii of curvature since, as the mould 30 has a variable configuration fitting with the panels to be produced; the bending station 18 can further be inclined accordingly, thereby obtaining the desired orientation of the lower strip 5 so that the curvature thereof conforms to that taken up in the mould 30.

Based upon this principle, alternative solutions to the above-described embodiment can be designed.

Indeed it would be possible to have an apparatus wherein the upper strip 4 or both strips (that is to say, not only the lower strip as in the embodiment described) is/are bent; it is further possible to have an apparatus in which the bending station 18 is adjustable independently, that is to say, not together with the frame 10.

This could be the case, for example, of an apparatus wherein the station 18 is not mounted on the frame 10, but rather on a separate support (a platform or the like) which can be adjusted independently.

It can be readily appreciated that the method of the invention can also be brought about if the insulanting material of the panels is constituted, in whole or in part, by mineral wool and not only by expanded resin.

In such a case it will be required to arrange downstream of the bending station, as an alternative or in addition to the injection apparatus 16, means for applying wool mats between the strips 4 and 5; this means can be of any type known per se or specifically designed as a function of the apparatus in which they are used.

In any case all of these variants fall within the scope of the claims below.

## Claims

1. Method for continuous manufacturing of curved insulating panels, comprising a forming phase in which an upper strip (4) and a lower strip (5) with insulating material interposed therebetween, are introduced into a mould (30) having a curved configuration according to that of the panels to be manufactured, and in that at least one of the strips (4, 5) is curved upstream of the mould (30) and introduced therein, substantially without discontinuity in its curvature.

2. Method according to claim 1, wherein said the at least one strip (5) is of sheet metal and undergoes a profiling phase before its bending phase.

3. Method according to claim 2, wherein the strip (5) is the lower strip and is profiled with prominent ribs (8).

4. Method according to any one of claims 1 to 3, wherein the insulating material comprises an expansible synthetic resin.

5. Method according to claim 4, comprising a heating phase of the strips (4, 5) after the profiling of at least one of them.

6. Method according to any one of the preceding claims, wherein the insulating material comprises an expansible synthetic resin which is applied on both of the strips (4, 5) before they are introduced into the curved mould (30).

7. Apparatus for continuous manufacturing of curved insulating panels comprising an upper strip (4) and a lower strip (5) with insulating material disposed therebetween by means of the method according to any one of claims 1 to 6, the apparatus comprising a mould (30) having an adjustable configuration, in which a plurality of upper rollers (47) and a plurality of lower rollers (48) define a curved path for the advance therebetween of the strips (4, 5) with the insulating material interposed, according to the panels to be manufactured.

8. Apparatus according to claim 7, wherein the upper rollers and the lower rollers (47, 48) are mounted in a plurality of guide modules (45) which are connected to each other in an articulated manner, so as to form a chain which can be configured according to different radii of curvature.

9. Apparatus according to claim 8, wherein the guide modules (45) comprise each an upper roller (47) and a pair of lower rollers (48), supported with their respective axes of rotation arranged at the vertices of a triangle.

10. Apparatus according to claim 9, wherein the guide modules (45) comprise plates (51, 52) for supporting the upper and lower rollers (47, 48), which plates (51, 52) are connected in an articulated manner by means of connection elements (53) supporting an upper roller (47).

11. Apparatus according to claim 10, wherein the guide modules (45) are mounted on curved longitudinal members (31, 32) replaceable in order to change the configuration of the mould (30) and to manufacture panels of different radii of curvature.

12. Apparatus according to any one of claims 7 to 11, comprising a station (18) for curving at least one of the strips (4, 5), which is orientable in such a manner that the curvature of the strip downstream of the station is uniform with that inside the mould (30).

13. Apparatus according to claim 12, wherein the curving station (18) is arranged on a support structure (10) having adjustable inclination, on which a profiling machine (6) for profiling the strip is also arranged.

14. Apparatus according to claim 13, wherein an oven for heating the strips (4, 5) is located on the support structure.

15. Apparatus according to any one of the preceding claims 7 to 14, comprising a device (16) for injecting expansible synthetic resin, which supplies the resin on both the upper and the lower strips (4,5).

16. Apparatus according to any one of the preceding claims 7 to 15, comprising a cutter (60) downstream of the curved mould (30), in which the cutting tool is moved along a curved path concentric with the curvature of the mould.

## Patentansprüche

1. Verfahren zur kontinuierlichen Herstellung von gebogenen Isolierplatten, umfassend eine Formgebungsphase, in der ein oberes Band (4) und ein unteres Band (5) mit dazwischen liegendem Isoliermaterial in eine Form (30) eingebracht werden, die eine gekrümmte Konfiguration entsprechend jener der herzustellenden Platten besitzt, und **dadurch**, dass mindestens eines der Bänder (4, 5) stromaufwärts von der Form (30) gebogen und in diese im Wesentlichen ohne Diskontinuität in ihrer Biegung eingebracht wird.

2. Verfahren gemäß Anspruch 1, bei dem das mindestens eine Band (5) aus Bandmetall ist und vor seiner Biegungsphase einer Profilierungsphase unterzogen wird.

3. Verfahren gemäß Anspruch 2, bei dem das Band (5) das untere Band ist und mit vorstehenden Rippen (8) profiliert ist.

4. Verfahren gemäß einem der Ansprüche 1 bis 3, bei dem das Isoliermaterial aus expansiblem Kunstharz besteht.

5. Verfahren gemäß Anspruch 4, umfassend eine Erwärmungsphase der Bänder (4, 5) nach dem Profilieren von mindestens einem von ihnen.

6. Verfahren gemäß einem der vorhergehenden Ansprüche, bei dem das Isoliermaterial aus einem expansiblen Kunstharz besteht, der auf beide Bänder (4, 5) aufgebracht wird, bevor sie in die gekrümmte Form (30) eingebracht werden.

7. Vorrichtung zur kontinuierlichen Herstellung von gebogenen Isolierplatten, umfassend ein oberes Band (4) und ein unteres Band (5) mit dazwischen angeordnetem Isoliermaterial, mittels des Verfahrens gemäß einem der Ansprüche 1 bis 6, wobei die Vorrichtung eine Form (30) umfasst, die eine einstellbare Konfiguration besitzt, bei der eine Vielzahl von oberen Rollen (47) und eine Vielzahl von unteren Rollen (48) eine gekrümmte Bahn entsprechend den herzustellenden Platten für den Vorschub der Bänder (4, 5) mit dem dazwischen liegenden Isoliermaterial definieren.

8. Vorrichtung gemäß Anspruch 7, bei der die oberen Rollen und die unteren Rollen (47, 48) in mehreren Führungsmodulen (45) befestigt sind, die in einer gelenkigen Art und Weise miteinander verbunden sind, um eine Kette zu bilden, die entsprechend unterschiedlichen Krümmungsradien konfiguriert werden kann.

9. Vorrichtung gemäß Anspruch 8, bei der die Führungsmodule (45) jeweils eine obere Rolle (47) und ein Paar unterer Rollen (48) umfassen, die mit ihren entsprechenden Rotationsachsen an den Spitzen eines Dreiecks angeordnet gelagert sind.

10. Vorrichtung gemäß Anspruch 9, bei der die Führungsmodule (45) Platten (51, 52) zum Tragen der oberen und unteren Rollen (47, 48) umfassen, wobei die Platten (51, 52) mit Hilfe von Verbindungselementen (53), die eine obere Rolle (47) halten, in gelenkiger Art und Weise verbunden sind.

11. Vorrichtung gemäß Anspruch 10, bei der die Führungsmodule (45) an gebogenen Longitudinalelementen (31, 32) befestigt sind, die austauschbar sind, um die Konfiguration der Form (30) zu verändern und Platten unterschiedlicher Krümmungsradien herzustellen.

12. Vorrichtung gemäß einem der Ansprüche 7 bis 11, umfassend eine Station (18) zum Biegen von mindestens einem der Bänder (4, 5), das derart ausrichtbar ist, dass die Krümmung des Bandes stromabwärts von der Station mit dem Inneren der Form (30) übereinstimmend ist.

13. Vorrichtung gemäß Anspruch 12, bei der die Biegestation (18) an einer Trägerkonstruktion (10) angeordnet ist, die eine einstellbare Neigung besitzt, an der außerdem eine Profilierungsmaschine (6) zum Profilieren des Bandes angeordnet ist.

14. Vorrichtung gemäß Anspruch 13, bei der an der Trägerkonstruktion ein Ofen zum Erwärmen der Bänder (4, 5) angeordnet ist.

15. Vorrichtung gemäß einem der vorhergehenden Ansprüche 7 bis 14, umfassend eine Einrichtung (16) zum Injizieren von expansiblem Kunstharz, die das Harz sowohl auf das obere als auch auf das untere Band (4, 5) zuführt.

16. Vorrichtung gemäß einem der vorhergehenden Ansprüche 7 bis 15, umfassend ein Schneidwerkzeug (60) stromabwärts von der gebogenen Form (30), wobei das Schneidwerkzeug entlang einer gekrümmten Bahn bewegt wird, die mit der Krümmung der Form konzentrisch ist.

## Revendications

1. Procédé pour la fabrication en continu de panneaux isolants incurvés, comprenant une phase de formation, dans laquelle une bande supérieure (4) et une bande inférieure (5) avec un matériau isolant intercalé entre elles, sont introduites dans un moule (30) ayant une configuration incurvée en fonction de celle des panneaux à fabriquer et en ce qu'au moins l'une des bandes (4, 5) est incurvée en amont du moule (30) et est introduite dans celui-ci, sensiblement sans discontinuité dans sa courbure.

2. Procédé selon la revendication 1, dans lequel ladite au moins une bande (5) est du métal en tôle et subit une phase de profilage avant sa phase de courbure.

3. Procédé selon la revendication 2, dans lequel la bande (5) est la bande inférieure et est profilée par des nervures saillantes (8).

4. Procédé selon l'une quelconque des revendications 1 à 3, dans lequel le matériau isolant comprend une résine synthétique expansible.

5. Procédé selon la revendication 4, comprenant une phase de chauffage des bandes (4, 5) après le profilage d'au moins l'une d'elles.

6. Procédé selon l'une quelconque des revendications précédentes, dans lequel le matériau isolant comprend une résine synthétique expansible qui est appliquée sur les deux bandes (4, 5) avant qu'elles ne soient introduites dans le moule incurvé (30).

7. Appareil pour la fabrication en continu de panneaux isolants incurvés comprenant une bande supérieure (4) et une bande inférieure (5) avec un matériau isolant disposé entre elles à l'aide du procédé selon l'une quelconque des revendications 1 à 6, l'appareil comprenant un moule (30) ayant une configuration ajustable, dans lequel une pluralité de rouleaux supérieurs (47) et une pluralité de rouleaux inférieurs (48) définissent un trajet incurvé pour l'avancement des bandes (4, 5) entre eux avec le matériau isolant intercalé, en fonction des panneaux à fabriquer.

8. Appareil selon la revendication 7, dans lequel les rouleaux supérieurs et les rouleaux inférieurs (47, 48) sont montes dans une pluralité de modules de guidage (45) qui sont raccordés les uns aux autres de manière articulée, de façon à former une chaîne qui peut être configurée selon différents rayons de courbure.

9. Appareil selon la revendication 8, dans lequel les modules de guidage (45) comprennent chacun un rouleau supérieur (47) et une paire de rouleaux inférieurs (48), supportés avec leurs axes de rotation respectifs disposés aux sommets d'un triangle.

10. Appareil selon la revendication 9, dans lequel les modules de guidage (45) comprennent des plaques (51, 52) pour supporter les rouleaux supérieurs et inférieurs (47, 48), lesquelles plaques (51, 52) sont raccordées de manière articulée à l'aide d'éléments de raccordement (53) supportant un rouleau supérieur (47).

11. Appareil selon la revendication 10, dans lequel les modules de guidage (45) sont montés sur des éléments longitudinaux incurvés (31, 32) remplaçables pour changer la configuration du moule (30) et pour fabriquer des panneaux de différents rayons de courbure.

12. Appareil selon l'une quelconque des revendications 7 à 11, comprenant un poste (18) pour incurver au moins l'une des bandes (4, 5), qui est orientable de sorte que la courbure de la bande en aval du poste soit uniforme avec celle à l'intérieur du moule (30).

13. Appareil selon la revendication 12, dans lequel le poste de courbure (18) est disposé sur une structure de support (10) ayant une inclinaison ajustable, sur laquelle une machine de profilage (6) pour profiler la bande est également agencée.

14. Appareil selon la revendication 13, dans lequel un four pour chauffer les bandes (4, 5) est situé sur la structure de support.

15. Appareil selon l'une quelconque des revendications 7 à 14, comprenant un dispositif (16) pour injecter une résine synthétique expansible, qui fournit la résine aux deux bandes supérieure et inférieure (4, 5).

16. Appareil selon l'une quelconque des revendications 7 à 15, comprenant une lame (60) en aval du moule incurvé (30), dans lequel l'instrument de coupe est déplacé le long d'un trajet incurvé concentrique à la courbure du moule.
